# EUROPEAN PATENT SPECIFICATION

(11) **EP 2 204 349 B1**
(45) Date of publication and mention of the grant of the patent: **16.07.2014**
(21) Application number: 09252905.6
(22) Date of filing: 24.12.2009
(51) Int. Cl.: B82B 3/00, C09D 11/00, D01F 9/00

(54) **Nano powder, nano ink and micro rod, and the fabrication methods thereof**
Nanopulver, Nanotinte und Mikrostäbchen sowie Herstellungsverfahren dafür
Nano-poudre, nano-encre et micro-tige, et leurs procédés de fabrication

(30) Priority: 26.12.2008 KR 20080134999; 11.09.2009 KR 20090086111
(43) Date of publication of application: 07.07.2010
(73) Proprietor: Korea Institute of Science and Technology, Seoul 136-791 (KR)
(72) Inventor: Kim, Il Doo, Seoul (KR); Choi, Seung Hun, Seoul (KR)
(74) Representative: Beresford, Keith Denis Lewis

(56) References cited:
- WO-A1-2005/021845
- WO-A2-2007/109304
- WO-A2-2007/121458
- DE-A1-102007 027 014
- DATABASE WPI Week 200821 10 August 2007 (2007-08-10), Thomson Scientific, London, GB; AN 2008-C93804 XP002574679 & KR 2007 080 546 A (AMOSENSE CO LTD) 10 August 2007 (2007-08-10)
- HYUN PARK: "Fabrication of Lanthanum Copper Oxide Nonofibers by Electrospinning" DISSERTATION, [Online] 12 December 2005 (2005-12-12), pages 1-126, XP002574680 Florida Retrieved from the Internet: URL:http://etd.fcla.edu/UF/UFE0009920/park _h.pdf> [retrieved on 2010-03-24]
- GEER VERRECK ET AL: "Preparation and Characterisation of Nanofibers Containing Amorphous Drug Dispersions Generated by Electrospinning" PHARMACEUTICAL RESEARCH, [Online] vol. 20, no. 5, 2003, pages 810-817, XP002574681 Retrieved from the Internet: URL:http://www.springerlink.com/content/t8 31m0727hw83646/fulltext.pdf> [retrieved on 2010-03-24]

## Description

### BACKGROUND OF THE INVENTION

### 1. Field of the Invention

The present invention relates to nanopowder containing nanoparticles, nano clusters or mixture thereof, nano ink containing nanopowder, and fabrication methods thereof.

### 2. Background of the Invention

Recently, studies on a thin film material deposition technology for making it possible to enlarge sizes of organic/inorganic light emitting diodes, memory devices, sensors, solar cells and the like and the render the same more flexible have actively been conducted. Especially, studies on practical use of deposition of thin film and production of fine patterns using ink containing nanoparticles are widely undergoing. Thin films were conventionally fabricated by printing precursors in form of metallic salt and conducting a post heat treatment therefor. However, because this method requires a heat treatment at a high temperature to form crystalline phase of thin films, there are many limitations of selection and application of a substrate in consideration of deformation and melting of the substrate occurred during the high temperature heat treatment.

A printing technology, such as one of thin film deposition technologies, may be representatively divided into a roll printing using a contact screen, flexo, gravure and the like, and an ink jet printing using a non-contact ink injection.

In order to form uniform thin films using the inkjet printing, viscosity of ink, dispersibility of ink, sizes of particles and the like contained in ink may act as important variables. The mainstream printing technology uses ink containing metallic nanoparticles [Korean paid-open application No. 10-2008-0029729, Korean Parent Registration No. 0897308, Korean Parent Registration No.0707911 and US Patent Registration No. 7018568]. Also, studies on an ink printing technology using 2-3 component metal-oxide nanoparticles, such as ZnO [Journal of American Chemical Society, Vol. 130 (2008) pp. 17603-17609], SnO₂ [Electrochemical Acta Vol. 51 (2006) pp. 2639-2645] and BaTiO₃ [Ceramics International Vol. 30 (2004) pp. 1885-1887] are partially being introduced. The metal-oxide nanoparticles used in the related art metal-oxide ink are typically produced by use of a hydrothermal method or coprecipitation method. However, for a single-phase metal oxide having a complicated composition over 3-component system, the hydrothermal method or coprecipitation method is not appropriate to fabricate nanoparticles in size of several tens nanometernm. Furthermore, in most conventional case reports, nanoparticles are spherical and partially have a single-crystal nanowire structure. However, for ink containing nano clusters composed of nanoparticles in size of several tens nanometernm other than individual nanoparticles, high inter-particle aggregation ensures further enhanced interface characteristic, thereby further enhancing density of deposited thin film.

Therefore, it is needed to ensure an easy fabrication of multi-component nanopowders with a complicated composition (hereinafter, 'nanopowder' refers to nanoparticle, nano cluster or their mixture) and ink containing the nanopowders, and application technologies of electronic devices, energy storage devices, sensors, catalysts using the multi-component nanopowders and nano ink.

### SUMMARY OF THE INVENTION

Object of the present invention is to provide an easy method of fabricating nanopowders to overcome problems that nanopowders are difficult to be applied to fabrication of multi-component nano materials with a complicated composition in case of nanoparticles being fabricated by the conventional hydrothermal method or coprecipitation method. Also, another object of the present invention is to provide an easy method of fabricating multi-component nano ink with a complicated composition. Furthermore, another object of the present invention is to provide a method for fabricating a high density thin film composed of metal, nonmetal, metal oxide, metal compound and nonmetal compound all using the nanopowders and the nano ink containing the nanopowders.

To achieve these and other advantages and in accordance with the purpose of the present invention, as embodied and broadly described herein, there is provided a method for fabricating nanopowder as defined in claim 1. The spinning step may include adding at least one kind of precursor capable of composing at least one kind selected from a group consisting of metal, nonmetal, metal oxide, metal compound, nonmetal compound and composite metal oxide to a solution containing polymer so as to prepare the spinning solution, and fabricating composite fiber web containing the polymer and at least one kind of precursor by spinning the spinning solution. Also, the generating of nano fiber may include heat-treating the composite fiber web to decompose the polymer.

At least one metal may be selected from a group consisting of Pt, Ni, Au, Fe, Co, Mo, In, lr, Ag, Sn, Ti, Cu, Pd and Ru. The nonmetal may be Si, the metal compound may be SnP, and at least one nonmetal compound may be at least one selected from a group consisting of SiN and SiOx (0<X<2). Also, the metal oxide may be a 2-component metal oxide selected from a group consisting of SnO₂, Al₂O₃, TiO₂, Fe₂O₃, ZrO₂, V₂O₅, Fe₂O₃, CoO, Co₃O₄, CaO, MgO, CuO, ZnO, In₂O₃, NiO, MoO₃ and WO₃, a 3-component metal oxide selected from a group consisting of SnSiO₃, Zn₂SnO₄, CoSnO₃, Ca₂SnO₄, CaSnO₃, ZnCo₂O₄, Co₂SnO₄, Mg₂SnO₄, Mn₂SnO₄, CuV₂O₆, NaMnO₂, NaFeO₂, LiCoO₂, LiNiO₂, SrTiO₃, Li₄Ti₅O₁₂, BaTiO₃ and LiMn₂O₄, and a metal oxide in more than a four-component system selected from a group consisting of LiFePO₄, Li[Ni_{1/3}CO_{1/3}Mn_{1/3}]O₂, Li[Ni_{1/2}Mn_{1/2}]O₂, LiNi1-ₓCoₓO₂, LiAl_{0.05}Co_{0.85}Ni_{0.15}O₂, La₁₋ₓSrₓCoO₃ (0.1≤×≤0.9), La_{o.8}Sr_{0.2F}e_{0.8}Co_{0.2}O₃, La₁-ₓSrₓMnO₃ (0.1≤×≤0.9) and La₁₋ₓSrₓFeO₃ (0.1≤×≤0.9), wherein the composite metal oxide is Pt-RuO₂, Au-RuO₂, Pt-IrO₂, Pt-TiO₂, Pd-SnO₂, Pd-TiO₂, Ni-Y_{0.08}Zr_{0.92}O₂, Ag-BaTiO₃, Pt-LaNiO₃ or Pt-Y_{0.08}Zr_{0.92}O₂. Furthermore, the metal oxide may be composed of at least two kinds of metal oxides, and have a fine structure of at least one selected from solid solution, mixed phase and compound of at least two kinds of metal oxides.

The precursor may be at least one kind selected from a group consisting of titanium propoxide, strontium chloride tetrahydrate, lithium nitrate, lithium acetylacetonate and manganese(II) acetate tetrahydrate, silicon tetraacetate, ruthenium chloride, tin acetate, nickel chloride, triphenylphosphine, lanthanumchloride-7-hydrate, chloroplatinic acid hexahydrate (H₂PtCl₆ · 6H₂O), iron chloride, cobalt acetate, aluminum acetate, zinc acetate, vanadium chloride, barium chloride solution, magnesium sulphate and copper acetate.

The spinning may include electrospinning, melt-blown spinning, flash spinning or electrostatic melt-blown spinning, and the heat treatment may be conducted at a temperature in the rage of 300-900 C in the air, an oxidation atmosphere, a reducing atmosphere (N₂/H₂, CO, N₂), an inert gaseous (Ar) atmosphere or a vacuum atmosphere.

Also, the method may further include drying the solvent at room temperature or high temperature after milling the nano fibers, the solvent containing the nanoparticles, the nano clusters or mixture thereof.

In another aspect of the present invention, there is provided a method for fabricating nano ink including, adding an additive for adjusting dispersibility or viscosity of nanopowders to nano ink containing the nanopowders produced by the method.

The additive may be at least one kind of dispersing agents selected from a group consisting of polyvinyl acetate, polyurethane, polyurethane copolymer including polyether urethane, cellulose acetate, cellulose derivative, polymethylmethacrylate (PMMA), polymethylacrylate (PMA), polyacryl copolymer, polyvinyl acetate copolymer, polyvinylalcohol (PVA), polyfurfuralalcohol (PPFA), polystyrene (PS), polystyrene copolymer, polyethylene oxide (PEO), polypropylene oxide (PPO), polyethylene oxide copolymer, polypropylene oxide copolymer, polycarbonate (PC), polyvinylchloride (PVC), polycaprolactone, polyvinylpyrrolidone (PVP), polyvinylfluoride, polyvinylidene fluoride copolymer and polyamide, wherein the cellulose derivative may be cellulose acetate butyrate or cellulose acetate propionate.

Also, the additive may be at least one kind of surfactant selected from a group consisting of triton X-100, acetic acid, cetyltrimethylammoniumbromide (CTAB), isopropyltris titanate and 3-aminopropyltriexothy-silane. The solvent may be at least one kind selected from a group consisting of water, ethanol, tetrahydrofuran, N,N'-dimethylformamide, N,N'- dimethylacetamide, N-methylpyrrolidone, acetonitrile, toluene, chloroform, methylenechloride, benzene and xylene.

By the method for fabricating nanopowders containing nanoparticles, nano clusters or mixture thereof, nano ink containing the nanopowders and microrods in accordance with the present invention, easy fabrication can be ensured for nanopowders containing nano clusters composed of at least one selected from a group consisting of metal, nonmetal, metal oxide, metal compound, nonmetal compound and composite metal oxide, and nano ink containing the nanopowders, and also deposition of thin film with high density can be achieved by use of the nano ink with excellent dispersibility.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic view showing a process of fabricating nano ink from nano fiber in accordance with the present invention; and
FIG. 2a is a scanning electron microscopic photo of SrTiO₃ nano fiber in accordance with a first embodiment of the present invention;
FIG. 2b is an enlarged scanning electron microscopic photo of SrTiO₃ nano fiber in accordance with the first embodiment of the present invention;
FIGS. 3a and 3b are photos of SrTiO₃ nanopowder in accordance with the first embodiment of the present invention;
FIG. 4a is a scanning electron microscopic photo of SrTi_{0.65}Fe_{0.35}O₃ nano fiber in accordance with a second embodiment of the present invention;
FIG. 4b is an enlarged scanning electron microscopic photo of SrTi_{0.65}Fe_{0.35}O₃ nano fiber in accordance with the second embodiment of the present invention;
FIG. 4c is a transmission electron microscopic photo of SrTi_{0.65}Fe_{0.35}O3 nanoparticles in accordance with the second embodiment of the present invention;
FIG. 5 is a scanning electron microscopic photo of SrTi_{0.65}Fe_{0.35}O₃ nanopowders in accordance with the second embodiment of the present invention;
FIG. 6a is a scanning electron microscopic photo of Li₄Ti₅O₁₂ nano fiber in accordance with a third embodiment of the present invention;
FIGS. 6b and 6c are transmission electron microscopic photos of Li₄Ti₅O₁₂ nano fiber in accordance with the third embodiment of the present invention;
FIG. 7 is a scanning electron microscopic photo of Li₄Ti₅O₁₂ nanopowders in accordance with the third embodiment of the present invention;
FIG. 8 is a scanning electron microscopic photo of LiMn₂O₄ nano fiber in accordance with a fourth embodiment of the present invention;
FIG. 9 is a scanning electron microscopic photo of LiMn₂O₄ nanopowders in accordance with the fourth embodiment of the present invention;
FIG. 10 is a transmission electron microscopic photo of platinum nanoparticles in accordance with a fifth embodiment of the present invention;
FIG. 11 is a scanning electron microscopic photo of LiMn₂O₄ micro rod in accordance with a sixth embodiment of the present invention; and
FIG. 12 is a scanning electron microscopic photo of SrTiO₃ thin film in accordance with a seventh embodiment of the present invention.

### DETAILED DESCRIPTION OF THE INVENTION

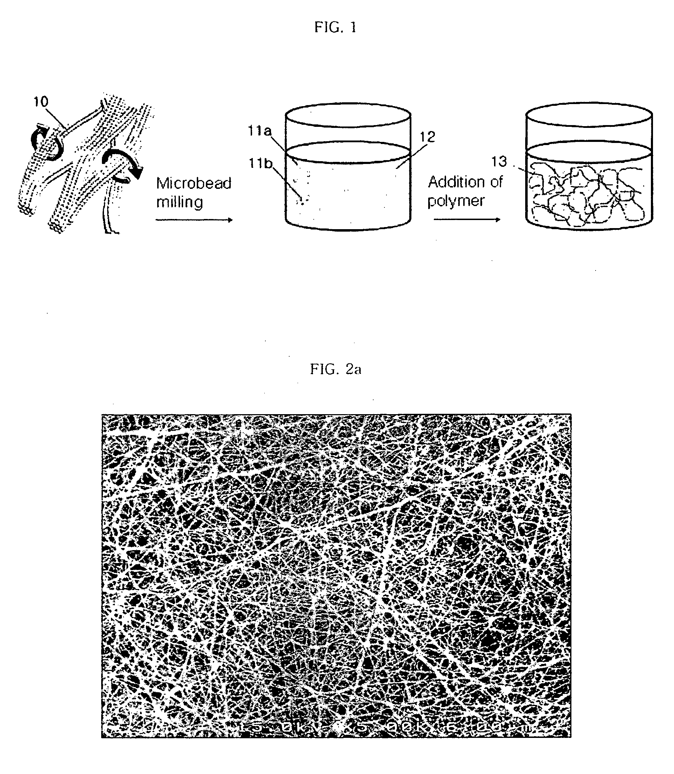

FIG. 1 is a schematic view showing a process of fabricating nano ink in accordance with the present invention.

Hereinafter, a method for fabricating nanopowders and nano ink containing the nanopowders will be described.

### Preparation of Spinning Solution

Firstly, a polymer solution is prepared by melting polymer in a solvent. The polymer may be not only thermosetting resin but also thermoplastic resin, and serve to give viscosity to the solution to promote an effective spinning. Preferably, the polymer added to allow an appropriate viscosity of a spinning solution may have on average molecular weight of 150,000-1,500,000. An example of the polymer may be at least one selected from a group consisting of polyvinyl acetate, polyurethane, polyurethane copolymer, polyether urethane, cellulose derivative such as cellulose acetate, cellulose acetate butyrate and cellulose acetate propionate, polymethylmethacrylate (PMMA), polymethylacrylate (PMA), polyacryl copolymer, polyvinyl acetate copolymer, polyvinylalcohol (PVA), polyfurfuralalcohol (PPFA), polystyrene (PS), polystyrene copolymer, polyethylene oxide (PEO), polypropylene oxide (PPO), polyethylene oxide copolymer, polypropylene oxide copolymer, polycarbonate (PC), polyvinylchloride (PVC), polycaprolactone, polyvinylpyrrolidone (PVP), polyvinylfluoride, polyvinylidene fluoride copolymer, polyacrylonitrile, polyamide, pitch and phenol resin. However, the contents of the present invention may not be limited to those examples. Any polymer by which nano fiber can be produced by spinning such as electrospinning may be applicable without limit.

The solvent may be one selected from a group consisting of ethanol, methanol, propanol, butanol, Isopropyl alcohol (IPA), dimethylformamide (DMF), acetone, tetrahydrofuran, toluene, water and mixture thereof; however, the present invention may not be limited to this.

The polymer solution concentration may preferably be in the range of 5-20% by weight.

The polymer solution may be added with at least one kind of precursors capable of producing at least one kind selected from a group consisting of metal, nonmetal, metal oxide, metal compound, nonmetal compound and composite metal oxide, so as to prepare a spinning solution. The precursor may be composed of metal salt or nonmetal salt, and may not be limited to a specific precursor if any is capable of producing metal, nonmetal, metal oxide, metal compound, nonmetal compound and composite metal oxide after being crystallized or amorphized through heat treatment. Here, examples of the metal, nonmetal, metal oxide, metal compound, nonmetal compound and composite metal oxide may be as aforementioned in the summary section. Also, the polymer may be decomposed during the heat treatment for the crystallization or amorphization. Here, a post heat treatment may be further carried out to completely eliminate the polymer.

1-60% by weight of the precursor may be added to the polymer solution.

### Production of composite fiber web

The above spinning solution once prepared is spun to produce composite fiber web. The composite fiber web describes a state in which metal, nonmetal, metal oxide, metal compound, non-metal compound and composite metal oxide are mixed with polymer so as to be fibrously entangled.

Examples of spinning may include electrospinning, flash spinning, electrostatic melt-blown spinning and the like; however, the present invention may not be limited to those examples.

For instance, the electrospinning may be carried out under conditions with a voltage of 5-30kV and a discharge speed of 10-50µℓ/min, thereby fabricating a large quantity of composite fiber with a fibrous diameter of 50-300nm. Sol-gel reaction by virtue of the electrospinning may greatly depend on moisture and temperature, so temperature and moisture around a spinning apparatus may act as important variables.

### Production of Nano Fiber

The above composite fiber web once prepared is heat-treated at a high temperature, whereby polymer within the composite fiber web is decomposed at the high temperature so as to be evaporated. After the evaporation of the polymer, nano fiber is produced with containing aggregates of nanoparticles of metal, nonmetal, metal oxide, metal compound, nonmetal compound and composite metal oxide. The heat-treatment temperature in the range of 300-800°C and time may be determined according to the decomposition temperature of the polymer. The heat-treatment may be conducted in the temperature range of 400-900°C according to a kind of metal precursor or metal oxide precursor. A low temperature heat treatment in the temperature range of 300-400°C produces nano fiber with aggregates of nanoparticles having crystalline or amorphous structure. Also, the heat treatment may be carried out in the air, under an oxidation or reducing atmosphere or in vacuum. The produced nano fiber is composed of ultrafine nanoparticles, thereby achieving a larger specific area and maximized reaction area.

The nanoparticles composing the nano fiber may consist of metal, nonmetal, metal oxide, metal compound and nonmetal compound according to a kind of precursor used and a heat treatment atmosphere. Alloy nanoparticles and metal-metal oxide composite nanoparticles may also be fabricated. For example, metal nanoparticles or alloy nanoparticles may be produced through a heat treatment under a reducing, i.e. deoxidization, atmosphere (N₂/H₂, CO, N₂, or Ar gaseous atmosphere). Here, examples of the alloy may include SnSi, SnCo, Zn₂Sn, SnP and the like, without limit to a specific alloy ratio. Furthermore, the metal oxide nanoparticles may be fabricated through a heat treatment in the air or under an oxidation atmosphere.

Examining a fine structure of nanoparticles composed of the metal oxide, the nanoparticles may consist of solid solution containing at least two kinds of metal oxides, a mixed phase of at least two kinds of phase-separated metal oxides, and/or a compound composed of at least two kinds of metal oxides, according to a relative amount ratio of used precursor. In other word, if a relative amount ratio of at least two kinds of precursors is within a solid solubility limit, the nanoparticles may be composed of solid solution containing at least two kinds of metal oxides. Also, if the relative amount ratio exceeds the solid solubility limit, the phase separation occurs at the ratio exceeding the solid solubility limit. Accordingly, the nanoparticles may be composed of the solid solution and the mixed phase of at least two kinds of phase-separated metal oxides. Also, if at least two kinds of precursors are used which do not produce the solid solution, the nanoparticles may be composed of a mixed phase of at least two kinds of phase-separated metal oxides. In addition, if at least two kinds of precursors used have a specific composition, the nanoparticles may be composed of a new compound with a specific composition. In the present invention, term "composite metal oxide" refers to an idea inclusive of even the composite of metal and metal oxide. Therefore, the composite metal oxide as the composite of metal and the metal oxide as well as the composite metal oxide as the composite of at least two kinds of metal oxides may have a fine structure consisting of solid solution of metal and metal oxide, mixed phase and/or compound.

### Production of nanopowders consisting of nanoparticles, nano clusters or mixture thereof and nano ink containing the nanopowders

The nano fiber is bead-milled, in order to produce nanopowders consisting of nanoparticles, nano clusters or a mixture thereof. The nano cluster is 5-100nm in width; an aspect ratio thereof, a measure of length to width is in the range of 1.5 to 10.0. Also, the nanoparticle is 5-100nm in diameter.

The bead milling is implemented by a microbead milling, in which a size of bead is adjusted so as to control distribution of nanoparticles and nano clusters. The size of bead is in the range of 0.015mm to 0.1mm. As the size of bead is smaller, the milling is further carried out and accordingly the content and diameter of nano clusters is further decreased so as to be completely milled, thereby with the nanoparticles remaining only. Also, a mixing ratio of the nanoparticles and nano clusters may be decided according to a milling time as well as the size of bead. In other word, as the milling takes longer time, the content of nano clusters is decreased. The microbead milling may preferably be carried out for 1 minute to 24 hours.

The milling process is carried out within solvent. For milling within the solvent, a solution containing milled nanoparticles, nano clusters or mixture thereof may be a colloidal solution. An example of the solvent may be at least one selected from a group consisting of water, ethanol, tetrahydrofuran, N,N'- dimethylformamide, N,N'- dimethylacetamide, N-methylpyrrolidone, acetonitrile, toluene, chloroform, methylenechloride, benzene and xylene.

Nanopowders may be produced sequentially through microbead milling and drying processes. Particularly, nano ink fabricated through the microbead milling has superior dispersibility, resulting in no precipitation of particles within the solvent.

Furthermore, in case of milling the nano fiber using 1-10mm sized zirconia ball, clusters in a shape of micro rod can be fabricated. The micro rod may be made of nanoparticles with a size of 5-100nm on average, have a width of 50-3000nm, and have an aspect ratio, namely, a measure of length to width, in the range of 1.5 to 200.

### Addition of Additive

The nanopowders are dissolved in solvent to produce nano ink. Specifically, during microbead milling, the milling is carried out within the solvent to thereby fabricate the nano ink. Also, a small amount of additive (dispersing agent or surfactant) is added to the nano ink to enhance dispersibility of the nano ink and adjust viscosity thereof. The nano ink may be fabricated only in a state of nanopowders being dispersed in solvent without an added additive.

Polymer, which is added as a dispersing agent for enhancing dispersibility of the nanoparticles or nano clusters within the solvent, may be at least one selected from a group consisting of polyvinyl acetate, polyurethane copolymer including polyurethane, polyether urethane, cellulose acetate, cellulose derivative, polymethylmethacrylate (PMMA), polymethylacrylate (PMA), polyacryl copolymer, polyvinyl acetate copolymer, polyvinylalcohol (PVA), polyfurfuralalcohol (PPFA), polystyrene (PS), polystyrene copolymer, polyethylene oxide (PEO), polypropylene oxide (PPO), polyethylene oxide copolymer, polypropylene oxide copolymer, polycarbonate (PC), polyvinylchloride (PVC), polycaprolactone, polyvinylpyrrolidone (PVP), polyvinylfluoride, polyvinylidene fluoride copolymer and polyamide. Alternatively, the cellulose derivative may be either cellulose acetate butyrate and cellulose acetate propionate. However, the present invention may not be limited to these examples, but if a polymer has a molecular weight of 5000-500000, it may be added as a dispersing agent.

Also, the surfactant may be at least one selected from a group consisting of triton X-100, acetic acid, cetyltrimethylammoniumbromide (CTAB), isopropyltris titanate and 3-aminopropyltriexothy-silane.

### Examples

Hereinafter, the present invention will be described in more detail with reference to the examples (embodiments). However, the examples are merely illustrative without limiting the present invention.

### Example 1: Fabrication of SrTiO₃ nanopowder and nano ink

1mmol of titanium propoxide (0.284g) was added to 2.583g of solvent (dimethylformamide (DMF)) and 0.5g of acetic acid was further added thereto so as to be completely dissolved, thereby preparing a solution containing polymers. To this solution were added 1mmol of strontium chloride tetrahydrate (0.266g), 0.861 g of water H₂O and 0.861 g of ethanol, thus being completely mixed. This mixture was then mixed with 0.63g of polyvinylpyrrolidone (PVP) (with 1,300,000 of molecular weight) and dissolved, thereby fabricating a spinning solution.

An electrospinning was carried out under conditions of 14.2kV of applied voltage, 10µm/min of discharge speed, 20% of humidity and temperature of 28°C. Accordingly, the solvent was evaporated so as to produce composite fiber web having SrTiO₃ precursor/PVP composite fiber being entangled by Sol-Gel reaction. For heat treatment, box furnace was used. A temperature was increased by 2°C per minute to become 150°C, and then the composite fiber web was retained at the temperature of 150°C for 1 hour. Afterwards, the temperature was further increased by 5°C per minute to reach 500°C, and the composite fiber web was retained at the temperature of 500°C for another 1 hour. Finally, after further increasing the temperature by 5°C per minute to be 700°C, the composite fiber web was heat-treated for 1 hour and followed by furnace cooling, thereby fabricating SrTiO₃ nano fiber. The polymers were decomposed during the heat treatment, and crystallization of SrTiO₃ having a perovskite structure was achieved.

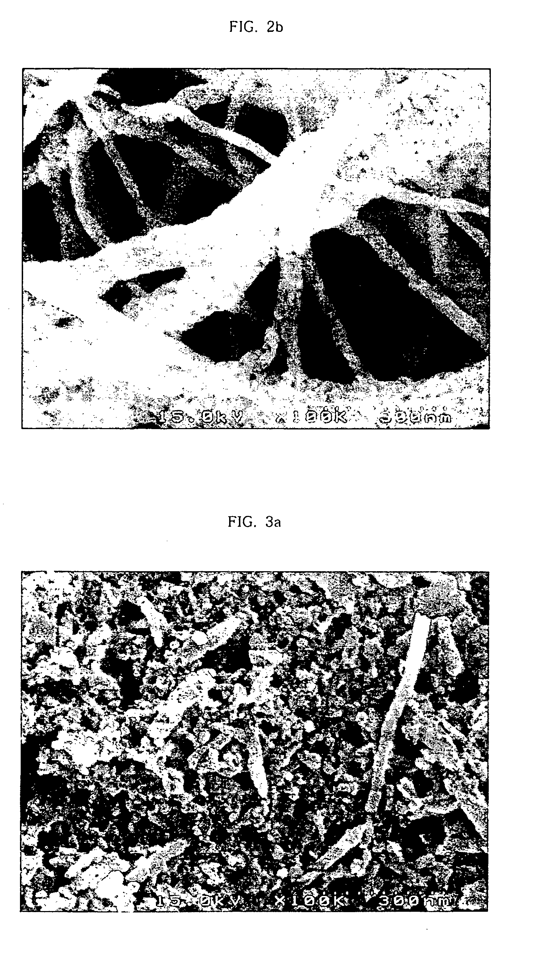

FIG. 2a shows a scanning electron microscopic photo (x 5,000) of the thusly-produced SrTiO₃ nano fiber, which exhibits well-produced nano fiber with a diameter of 50-600nm. FIG. 2b shows an enlarged scanning electron microscopic photo (x 100,000) of FIG. 2a, which exhibits that nano fiber composed of fine nanoparticles (20-40nm) has been well produced. The nano fiber produced by sol-gel reaction is accompanied by nucleation and growth during the heat treatment. Hence, the sizes of nanoparticles composing the nano fiber depend on the heat treatment temperature and time. The fine nanoparticles can be produced within a shorter heat treatment time at a low heat treatment temperature, while relatively large nanoparticles (50-100nm) can be produced within a longer heat treatment time at a high temperature. What is important is that the nano fiber consists of aggregates of fine nanoparticles and the aggregated particles may easily be disentangled and separated through a milling process. These are the important characteristics of fabricating the nanopowders and the nano ink by milling the nano fiber produced through the electrospinning.

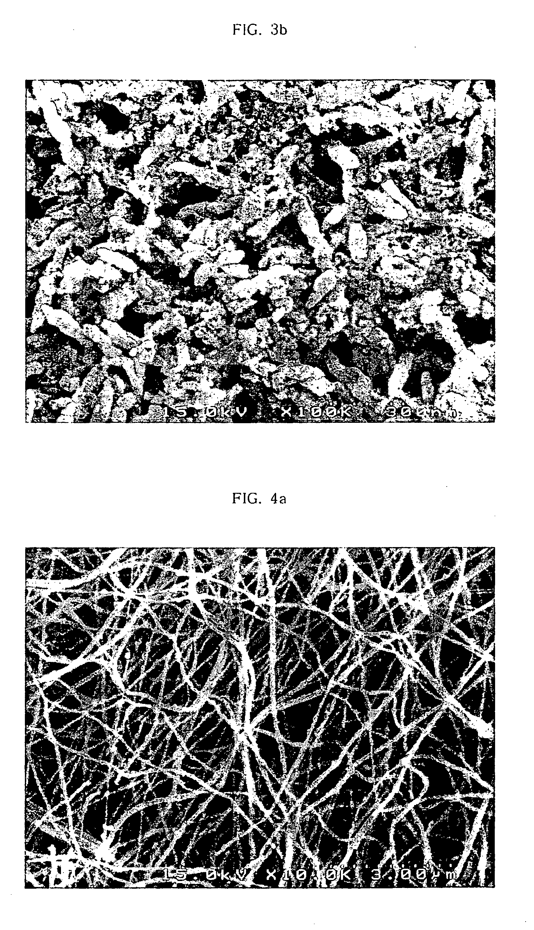

In order to fabricate nanopowder and nano ink from the SrTiO₃ nano fiber produced through the electrospinning, a microbead milling (Kotobuki) was carried out. Ethanol was used as solvent for the bead milling. 2g of SrTiO₃ nano fiber (1% by weight) were added to 200ml of ethanol and the mixture was subjected to the milling. The bead was 0.1nm in size, and colloidal solutions were prepared, respectively, by 30-minute milling and 2-hour milling at 4000rpm. FIG. 3a shows a scanning electron microscopic (x 100,000) photo of SrTiO₃ nano powders, measured by dropping SrTiO₃ colloidal solution obtained after 30-minute milling onto a carbon tape and drying the same. It can be observed that nano clusters in a shape of rod having nanoparticles with sizes of 20-40nm being aggregated are also visible, which exhibits that 0.1mm sized bead was slightly large for completely milling the nano fiber into individual nanoparticles. FIG. 3b shows a scanning electron microscopic photo (x 100,000) of SrTiO₃ nano powders, measured by dropping SrTiO₃ colloidal solution obtained after 2-hour milling onto a carbon tape and drying the same. It can be observed that as the bead milling takes longer time, nano clusters in the shape of rod have shorter length, compared to the photo of FIG. 3a, and fine nanoparticles and nano clusters are uniformly distributed. The nano clusters are aggregates of nanoparticles. Accordingly, an inter-particle contact characteristic can be enhanced. Also, since the fine nanoparticles and the nano clusters coexist, the density of thin film after printing or electro-spray of the colloidal solution can be enhanced.

In order to enhance dispersibility of the nanoparticles, the nano clusters or mixture thereof, poly(4-vinylphenol) polymer (MW of 20000) were added to the SrTiO₃ colloidal solutions in the range of 0.1-20% by weight with respect to the weight of SrTiO₃ nanopowders, thereby fabricating SrTiO₃ₙ nano ink.

### Example 2: Fabrication of Sr_{1.0}Ti_{0.65}Fe_{0.35}O₃ nanopowder and nano ink

1mmol of titanium propoxide (0.1847g) was added to 2.583g of solvent (DMF) and 0.5g of acetic acid was further added thereto so as to be completely dissolved. To this solution were added 1mmol of strontium chloride tetrahydrate (0.266g), 0.861 g of water (H₂O) and 0.861 g of ethanol, thereby being completely dissolved. 0.0567g of FeCl₃ was further added to the solution, and completely mixed together.

Afterwards, 0.63g of polyvinylpyrrolidone (PVP) (with 1,300,000 of molecular weight) was added to the solution and mixed, thereby fabricating a spinning solution.

An electrospinning was carried out under conditions of 17.3kV of applied voltage, 7µm/min of discharge speed, 21% of humidity and temperature of 27°C. Accordingly, the solvent was evaporated so as to produce composite fiber web having Sr_{1.0}Ti_{0.35}Fe_{0.35}O₃ precursor/PVP composite fibers being entangled by Sol-Gel reaction. A temperature was increased by 2°C per minute to become 150°C, and then the composite fiber web was retained at the temperature of 150°C for 1 hour. Afterwards, the temperature was further increased by 5°C per minute to reach 500°C, and the composite fiber web was retained at a temperature of 500°C for another 1 hour. Finally, after further increasing the temperature by 5°C per minute to be 750°C, the composite fiber web was heat-treated for 1 hour and followed by furnace cooling, thereby fabricating Sr_{1.0}Ti_{0.65}Fe_{0.35}O₃ nano fiber.

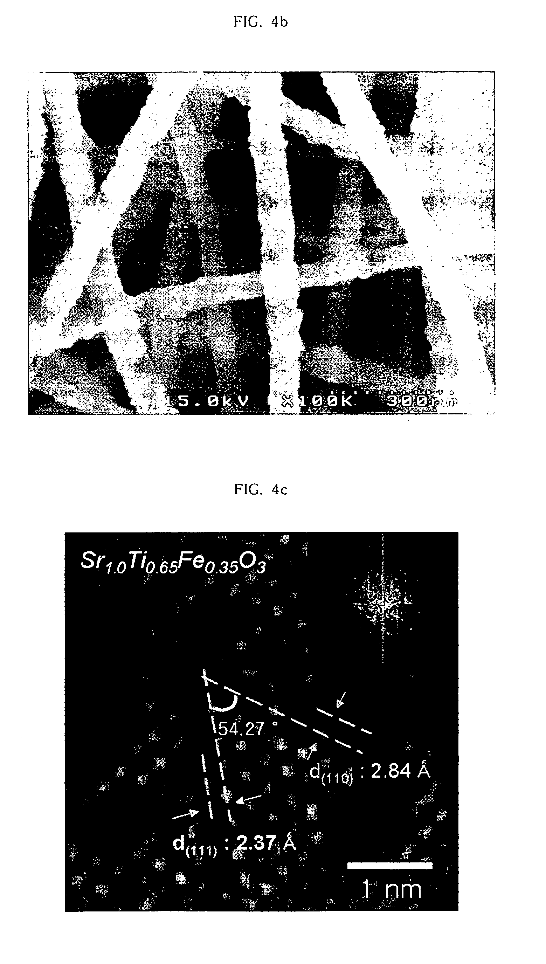

FIG. 4a shows a scanning electron microscopic photo (x 5,000) of the Sr_{1.0}Ti_{0.65}Feo_{0.35}O₃ nano fiber, which exhibits well-produced nano fiber having a diameter of 50-200nm. FIG. 4b is an enlarged scanning electron microscopic photo (x 100,000) of FIG. 4a, which exhibits well-produced nano fiber composed of fine nanoparticles (10-20nm). FIG. 4c shows a transmission electron microscopic photo of nanoparticles composing the Sr_{1.0}Ti_{0.65}Fe_{0.3}O₃ nano fiber, which exhibits well-produced single-phase Sr_{1.0}Ti_{0.65}Fe_{0.3}O₃. An inter-plane distance of (110) planes is 0.284nm and an inter-plane distance of (111) planes is 0.237nm, which is appropriately consistent to Sr_{1.0}Ti_{0.65}Fe_{0.35}O₃ in a perovskite structure.

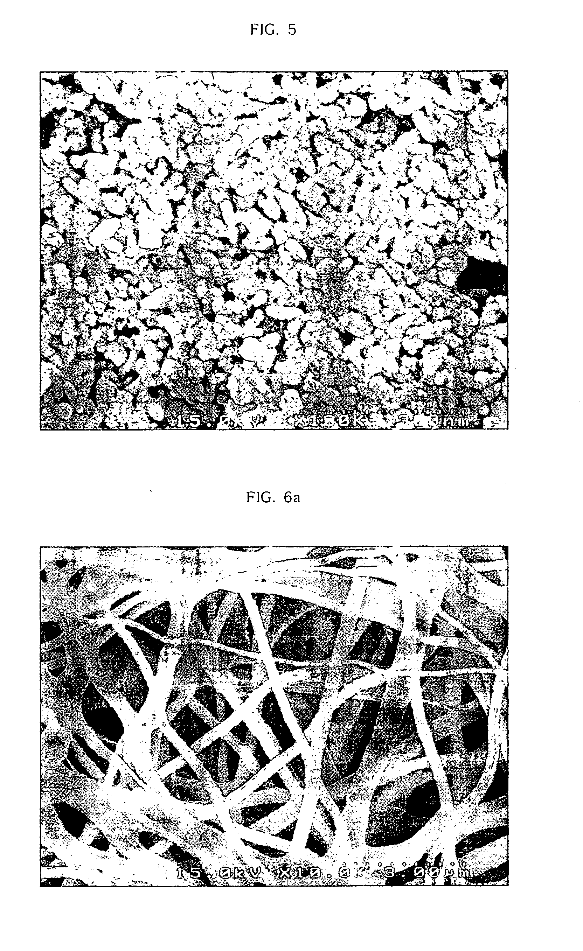

In the next step, the nano fiber was subjected to the microbead milling (Kotobuki). Ethanol was used as solvent for the bead milling. 2g of Sr_{1.0}Ti_{0.65}Fe_{0.35}O₃ nano fiber was added to 200ml of ethanol, which was followed by a milling. Bead was 0.1mm in size. The resultant was then subjected to 1-hour milling at 4000 rpm, thereby fabricating a colloidal solution. FIG. 5 shows a scanning electron microscopic photo (x 100,000) of Sr_{1.0}Ti_{0.65}Fe_{0.35}O₃ nanopowders, measured by dropping Sr_{1.0}Ti_{0.65}Fe_{0.35}O₃ colloidal solution prepared after 30-minute milling onto a carbon tape and drying the same. A photo of a surface composed of particles with sizes of 30-90nm is shown in FIG. 5. The particles as shown in FIG. 5 are secondary particles composed of finer nanoparticles (5-10nm). Since fine nanoparticles exist with composing nano clusters, the density of thin film can be enhanced after printing or electro-spray of the colloidal solution.

In order to enhance dispersibility of the nano ink, poly(4-vinylphenol) polymer (MW of 20000) were added in the range of 0.1-20% by weight with respect to the weight of the Sr_{1.0}Ti_{0.65}Fe_{0.35}O₃ nanopowder.

### Example 3: Fabrication of Li₄Ti₅O₁₂ nanopowder and nano ink

Li₄Ti₅O₁₂ has a spinel structure, and is used as a negative active material for a secondary battery with discharge capacity of 160 mAh/g. More importantly, no deformation occurs in the structure during reaction with Li, so it is attracting public attention as a material with high stability and long life cycle.

2.8mmol of lithium nitrate (0.193g) was added to 15g of solvent (DMF) and completely dissolved. 3.5mmol of titanium propoxide (0.994g) and 1 g of acetic acid were added to the solution and completely mixed. The obtained solution was added with 1.5g of polyvinylacetate (PVAc) with molecular weight of 1,300,000, thereby fabricating a spinning solution.

An electrospinning was carried out under conditions of 14.6kV of applied voltage, 10µm/min of discharge speed, 19% of humidity and temperature of 28°C, thereby fabricating composite fiber web. A temperature was increased by 2°C per minute to be 150°C, and then the composite fiber web was retained at the temperature of 150°C for 1 hour. Afterwards, the temperature was further increased by 5°C per minute to reach 500°C, and the composite fiber web was retained at the temperature of 500°C for another 1 hour. Finally, after further increasing the temperature by 5°C per minute to become 750°C, the composite fiber web was heat-treated for 1 hour and followed by furnace cooling, thereby fabricating Li₄Ti₅O₁₂ nano fiber.

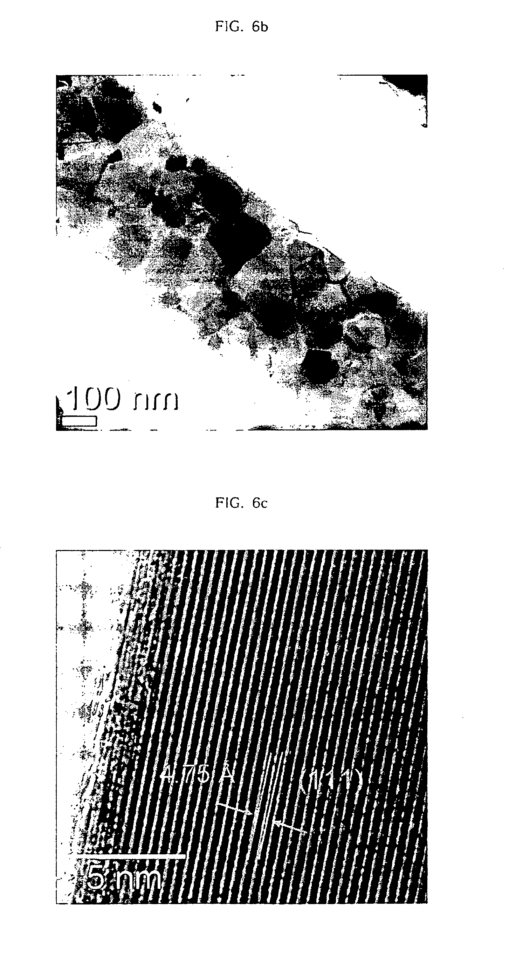

FIG. 6a is a scanning electron microscopic photo (x 10,000) of Li₄Ti₅O₁₂ nano fiber, which exhibits well-produced nano fiber with a diameter of 300-1000nm. FIG. 6b is an enlarged transmission electron microscopic photo showing a piece of Li₄Ti₅O₁₂ nano fiber, which exhibits nano fiber composed of nanoparticles with sizes in the range of 20-100nm. FIG. 6c exhibits a lattice image of nanoparticles, from which it can be noticed that an inter-plane distance of (111) planes is 0.476nm so as to be well consistent to Li₄Ti5O₁₂ in a spinel structure.

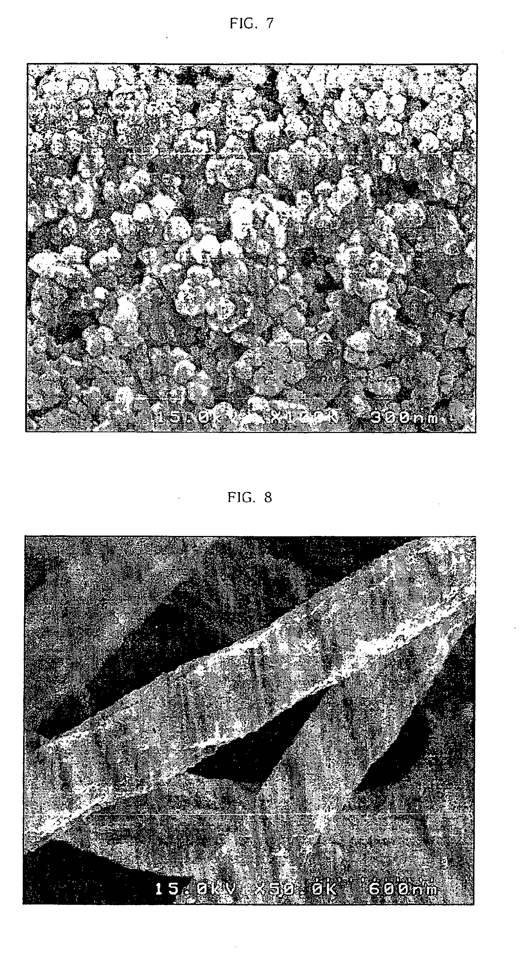

In order to fabricate nanopowder and nano ink from the Li₄Ti₅O₁₂ nano fiber, a micrbead milling was carried out. Ethanol was used as solvent for the bead milling. 10g of Li₄Ti₅O₁₂ nano fiber was put into 200ml of ethanol and followed by a milling. Bead was 0.015mm in size, and 30-minute milling at 4000 rpm was carried out, thereby fabricating a colloidal solution. FIG. 7 is a scanning electron microscopic photo (x 100,000) of Li₄Ti₅O₁₂ nanopowders, measured by dropping Li₄Ti₅O₁₂ colloidal solution obtained after 30-minute milling onto a carbon tape and drying the same, which exhibits a photo of a surface composed of particles with sizes of 30-60nm.

In order to enhance dispersibility of nano ink produced from the Li₄Ti₅O₁₂ nano fiber, poly(4-vinylphenol) polymer (MW 20,000) were added in the range of 0.1-20% by weight with respect to the weight of Li₄Ti5O₁₂ nanopowder, thereby fabricating nano ink.

### Example 4: Fabrication of LiMn₂O₄ nanopowder and nano ink

LiMn₂O₄ has a spinel structure, and is used as a positive active material for a secondary battery having a theoretical capacity of 148 mAh/g and an operation voltage of 3.5V. Importantly, LiMn₂O₄ exhibits high environmental stability and low price, compared to other positive active material, thereby being used even as a positive active material for hybrid vehicle.

0.267g of lithium acetylacetonate and 1.233g of manganese(II) acetate tetrahydrate were poured into 7.5g of solvent (DMF) and completely dissolved. 1.125g of polyvinylpyrrolidone (PVP) with molecular weight of 1,300,000 were added and dissolved into the solution, thereby fabricating a spinning solution.

An electrospinning was carried out under conditions of 15kV of applied voltage, 10µm/min of discharge speed, 22% of humidity and temperature of 26°C, thereby producing composite fiber web.

A temperature was increased by 1°C per minute to be 200°C, and then the composite fiber web was retained at the temperature of 200°C for 30 minutes. Afterwards, the temperature was further increased by 5°C per minute to reach 400°C, and the composite fiber web was retained at the temperature of 400°C for 30 minutes. Finally, after further increasing the temperature by 5°C per minute to become 700°C, the composite fiber web was heat-treated for 1 hour and followed by furnace cooling, thereby fabricating LiMn₂O₄ nano fiber. The reason of sequentially carrying out multiple steps of heat treatment is to fabricate lithium complex oxide with well produced nano fiber. Specifically, for a material having elements in three or more component systems, the heat treatment in each step becomes more important for obtaining complete fibrous shape.

FIG. 8 is a scanning electron microscopic photo(x 50,000) of LiMn₂O₄ nano fiber, which exhibits a nicely produced nano fiber with a diameter of 400-600nm.

A microbead milling was carried out to fabricate nanopowder and nano ink from the LiMn₂O₄ nano fiber. Ethanol was used as solvent for the bead milling. 10g of LiMn₂O₄ nano fiber (5% by weight) were added to 200ml of ethanol, and followed by the milling. The bead was 0.015nm in size, and a colloidal solution was prepared through 30-minute milling at 4000rpm.

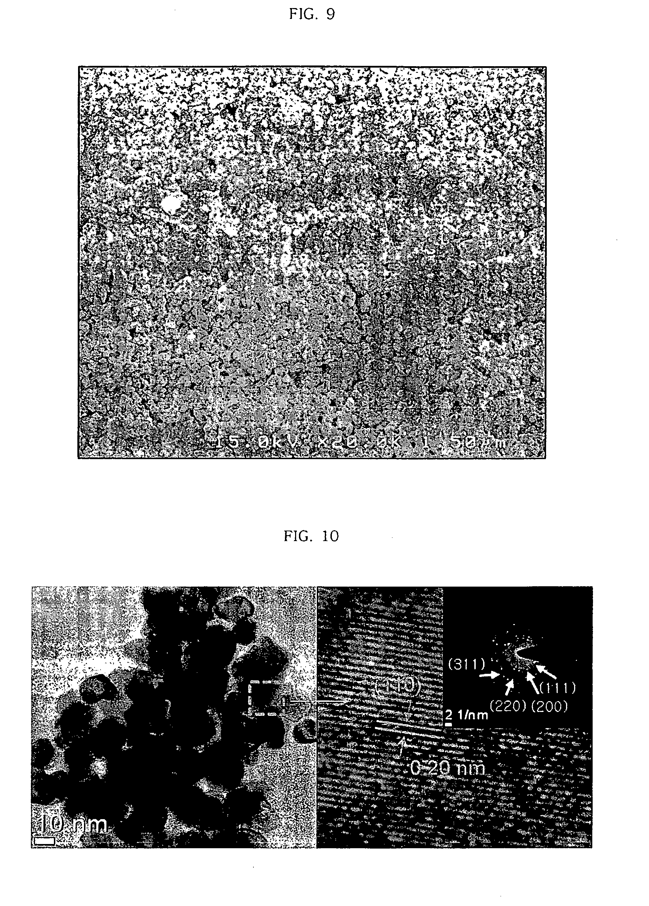

FIG. 9 is a scanning electron microscopic photo(x 20,000) of LiMn₂O₄ nanopowders, measured by dropping the LiMn₂O₄ colloidal solution obtained after 30-minute milling onto a carbon tape and drying the same. It exhibits a photo of a surface composed of particles having sizes of 30-40nm.

In order to enhance dispersibility of nano ink, poly(4-vinylphenol) polymer (MW of 20000) were added in the range of 0.1-20% by weight with respect to the weight of LiMn₂O₄ nanopowder, thereby fabricating nano ink.

### Example 5: Fabrication of platinum nanopowder and nano ink

Polyvinylpyrrolidone (PVP), dimethylformamide (DMF) and chloroplatinic acid hexahydrate ((H₂PtCl₆ · 6H₂O) as a platinum precursor were used to fabricate platinum (Pt) nanopowder and nano ink.

Firstly, after mixing 0.63g of PVP (MW of 1,300,000) with 0.283g of DMF and 0.86g of ethanol, 0.315g of platinum precursor was added to the mixture. Here, 0.86g of deionized water was further added and stirred together. 0.05g of cetyltrimethyl ammonium bromide (CTAB) was poured into the stirred solution and then stirred for 2 hours.

20ml of the thusly prepared solution was filled in a syringe and thereafter slowly spouted out (10µℓ/min), thereby carrying out an electrospinning (humidity: 35%, available voltage: 12kV and ambient temperature: 30°C). Accordingly, solvent was evaporated so as to produce platinum precursor/PVP composite fiber web by Sol-Gel reaction.

The composite fiber web was subjected to heat-treatment for 30 minutes at 450°C so as to decomposed polymer, thus fabricating nano fiber web in quantity. It was observed from a scanning electron microscopic photo of the platinum nano fiber web produced after the heat treatment that the platinum nano fiber was well produced with a diameter in the range of 200-600nm. A microbead milling was carried out to fabricate platinum nanopowders and nano ink from the platinum nano fibers. Ethanol was used as solvent for the bead milling. 10g of LiMn₂O₄ nano fiber (5% by weight) was put into 200ml of ethanol, and followed by milling. The bead was 0.015mm in size. The milling was carried out for 30 minutes at 4000 rpm, thereby fabricating a colloidal solution. FIG. 10 is a transmission electron microscopic photo, measured by drying the platinum colloidal solution produced after 30-minute milling. Referring to the left photo of FIG. 10, it can be exhibited that platinum nanoparticles with a size of 20nm were uniformly distributed. Also, referring to the right photo of FIG. 10, it can be exhibited that nano particles having diffraction pattern and lattice interval both exactly equal to the platinum were produced.

In order to enhance dispersibility of the platinum nano ink, poly(4-vinylphenol) polymer (MW of 20000) was added in the range of 0.1-20% by weight with respect to the weight of platinum nanoparticles, thereby fabricating nano ink.

### Example 6: Fabrication of LiMn₂O₄ micro rod

In case of milling LiMn₂O₄ nano fiber produced by Example 4 by using a zirconia ball in a size of 1-10mm, clusters in a shape of micro rod are able to be fabricated. The micro rod consists of nanoparticles in size of 5-100nm on average and width of 50-3000nm, and has an aspect ratio, a measure of length to width, in the range of 1.5 to 200.

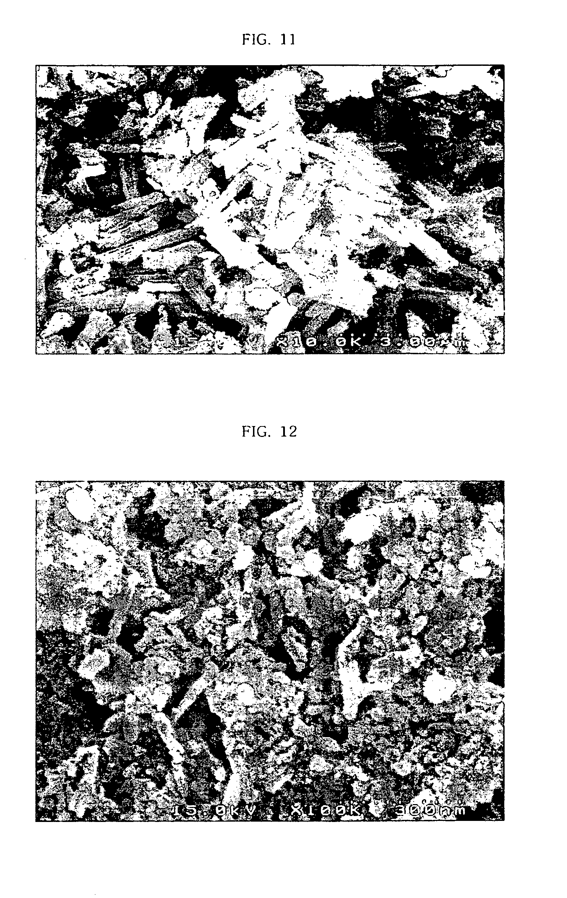

FIG. 11 is a scanning electron microscopic photo of clusters in a shape of micro rod, produced after ball-milling the LiMn₂O₄ nano fiber produced by Example 4 for two hours within ethanol solvent by using 2mm zirconia ball. From the photo, the nicely produced micro rod in the rod shape with a diameter of 20-40nm and a length of 1-3µm can be observed.

### Example 7: Fabrication of thin film containing SrTiO₃ nano ink

The SrTiO₃ nano ink fabricated through the 2-hour microbead milling in Example 1 was electro-sprayed using SrTiO₃ nano ink to fabricate a thin film.

The SrTiO₃ nano ink was filled in a syringe and electro-sprayed on a stainless steel substrate. Here, a voltage was 16.5kV, a discharge speed was 20µℓ/min, and a distance between tip and substrate was 12.5cm. A scanning electron microscopic photo (x 10,000) of thin film coated with tin oxide nanoparticles produced after the electro-spray can be exhibited in FIG. 12. It can be noticed that the thin film composed of nanoparticles and nano clusters by being electro-sprayed from the SrTi03 nano ink produced through the microbead milling of 0.1mm was uniformly fabricated. The polymer used for uniform dispersion and viscosity may be completely decomposed through a post heat treatment at a temperature of 300-500 °C.

Example 7 introduced the method of fabricating the thin film by the electro-spray of nano ink; however, the present invention may not be limited to this method. Alternatively, the thin film may be easily fabricated by printing nano ink of the present invention.

The foregoing embodiments and advantages are merely exemplary and are not to be construed as limiting the present disclosure. The present teachings can be readily applied to other kinds of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A method for fabricating nanopowder for nano ink, comprising:
spinning a spinning solution containing at least one kind of precursor capable of composing at least one kind selected from a group consisting of metal, nonmetal, metal oxide, metal compound, nonmetal compound and composite metal oxide;
crystallizing the spun precursor to generate nano fiber consisting of at least one kind of nanoparticles selected from a group consisting of metal, nonmetal, metal oxide, metal compound, nonmetal compound and composite metal oxide, wherein the nanoparticles have diameters of 5 - 100 nm; and
milling the nano fiber by a microbead milling to fabricate nanopowders containing the nanoparticles, nanoclusters of the nanoparticles or mixture thereof, wherein the nanoclusters have widths of 5 - 100 nm and aspect ratios of length to width in the range of 1.5 to 10.0 and the microbead milling is carried out by using zirconia balls in the size range of 0.015 - 0.1 mm, and wherein the microbead milling is carried out for the nano fiber within solvent.

2. The method of claim 1, wherein the spinning step comprises:
adding at least one kind of precursor capable of composing at least one kind selected from a group consisting of metal, nonmetal, metal oxide, metal compound, nonmetal compound and composite metal oxide to a solution containing polymer so as to prepare the spinning solution; and
fabricating composite fiber web containing the polymer and at least one kind of precursor by spinning the spinning solution.

3. The method of claim 2, wherein the generating of nano fiber comprises:
heat-treating the composite fiber web to decompose the polymer

4. The method of claim 1, wherein the metal is at least one selected from a group consisting of Pt, Ni, Au, Fe, Co, Mo, In, Ir, Ag, Sn, Ti, Cu, Pd and Ru.

5. The method of claim 1, wherein the nonmetal is Si, the metal compound is SnP, and the nonmetal compound is at least one selected from a group consisting of SiN and SiOx (0<X<2).

6. The method of claim 1, wherein the metal oxide is a 2-component metal oxide selected from a group consisting of SnO₂, Al₂O₃, TiO₂, Fe₂O₃, ZrO₂, V₂O₅, Fe₂O₃, CoO, Co₃O₄, CaO, MgO, CuO, ZnO, In₂O₃, NiO, MoO₃ and WO₃, a 3-component metal oxide selected from a group consisting of SnSiO₃, Zn₂SnO₄, CoSnO₃, Ca₂SnO₄, CaSnO₃, ZnCo₂O₄, Co₂SnO₄, Mg₂SnO₄, Mn₂SnO₄, CuV₂O₆, NaMnO₂, NaFeO₂, LiCoO₂, LiNiO₂, SrTiO₃, Li₄Ti₅O₁₂, BaTiO₃ and LiMn₂O₄, and a metal oxide in more than a four-component system selected from a group consisting of LiFePO₄, Li[Ni_{1/3}Co_{1/3}Mn_{1/3}]O₂, Li[Ni_{1/2}Mn_{1/2}]O₂, LiNi₁₋ₓCOₓO₂, LiAl_{0.05}Co_{0.85}Ni_{0.15}O₂, La₁₋ₓSrₓCoO₃ (0.1≤X≤0.9), La_{0.8}Sr_{0.2}Fe_{0.8}Co_{0.2}O3, La₁₋ₓSrₓMnO₃ (0.1≤X≤0.9) and La₁₋ₓSrₓFeO₃ (0.1≤X≤0.9), wherein the composite metal oxide is Pt-RuO₂, Au-RuO₂, Pt-IrO₂, Pt-TiO₂, Pd-SnO₂, Pd-TiO₂, Ni-Y_{00.8}Zr_{0.92}O₂, Ag-BaTiO₃, Pt-LaNiO₃ or Pt-Y_{0.08}Zr_{0.92}O₂.

7. The method of claim 1, wherein the metal oxide is composed of at least two kinds of metal oxides, and has a fine structure of at least one selected from solid solution, mixed phase and compound of at least two kinds of metal oxides.

8. The method of claim 1, wherein the precursor is at least one kind selected from a group consisting of titanium propoxide, strontium chloride tetrahydrate, lithium nitrate, lithium acetylacetonate and manganese(II) acetate tetrahydrate, silicon tetraacetate, ruthenium chloride, tin acetate, nickel chloride, triphenylphosphine, lanthanumchloride-7-hydrate, chloroplatinic acid hexahydrate (H₂PtCl₆· 6H₂O), iron chloride, cobalt acetate, aluminum acetate, zinc acetate, vanadium chloride, barium chloride solution, magnesium sulphate and copper acetate.

9. The method of claim 1, wherein the spinning comprises electrospinning, melt-blown spinning, flash spinning or electrostatic melt-blown spinning.

10. The method of claim 3, wherein the heat treatment is conducted at a temperature in the range of 300-900°C in the air, a reducing atmosphere, a deoxidation atmosphere (N₂/H₂, CO, N₂), an inert gaseous (Ar) atmosphere or a vacuum atmosphere.

11. The method of claim 1, further comprising drying the solvent at room temperature or high temperature after milling the nano fibers, the solvent containing the nanoparticles, the nano clusters or mixture thereof.

12. A method for fabricating nano ink comprising:
adding an additive for adjusting dispersibility or viscosity of nanopowders to nano ink containing the nanopowders produced by the method of one of claims 1 to 11.

13. The method of claim 12, wherein the additive is at least one kind of dispersing agents selected from a group consisting of polyvinyl acetate, polyurethane, polyurethane copolymer including polyether urethane, cellulose acetate, cellulose derivative, polymethylmethacrylate (PMMA), polymethylacrylate (PMA), polyacryl copolymer, polyvinyl acetate copolymer, polyvinylalcohol (PVA), polyfurfuralalcohol (PPFA), polystyrene (PS), polystyrene copolymer, polyethylene oxide (PEO), polypropylene oxide (PPO), polyethylene oxide copolymer, polypropylene oxide copolymer, polycarbonate (PC), polyvinylchloride (PVC), polycaprolactone, polyvinylpyrrolidone (PVP), polyvinylfluoride, polyvinylidene fluoride copolymer and polyamide, and wherein the cellulose derivative is cellulose acetate butyrate or cellulose acetate propionate.

14. The method of claim 13, wherein the dispersing agent is added in a range of 0.1-20% by weight with respect to the nanopowder.

15. The method of claim 12, wherein the additive is at least one kind of surfactant selected from a group consisting of triton X-100, acetic acid, cetyltrimethylammoniumbromide (CTAB), isopropyltris titanate and 3-aminopropyltriexothy-silane.

16. The method of claim 12, wherein the solvent is at least one kind selected from a group consisting of water, ethanol, tetrahydrofuran, N,N'- dimethylformamide, N,N'- dimethylacetamide, N-methylpyrrolidone, acetonitrile, toluene, chloroform, methylenechloride, benzene and xylene.

## Patentansprüche

1. Verfahren zur Herstellung von Nanopulver für Nanotinte, umfassend:
Spinnen einer Spinnlösung, die mindestens eine Art eines Ausgangsstoffs enthält, der dazu fähig ist Metall, Nichtmetall, Metalloxid, eine Metallverbindung, eine Nichtmetallverbindung und/oder Verbundmetalloxid zusammenzusetzen;
Kristallisieren des gesponnenen Ausgangsstoffs, um eine Nanofaser zu erzeugen, die aus mindestens einer Art von Nanopartikeln aus Metall, Nichtmetall, Metalloxid, einer Metallverbindung, einer Nichtmetallverbindung und/oder Verbundmetalloxid besteht, wobei die Nanopartikel einen Durchmesser von 5 bis 100 nm aufweisen; und
Mahlen der Nanofaser durch ein Mikrokügelchen-Mahlen, um Nanopulver herzustellen, das die Nanopartikel, Nanocluster der Nanopartikel oder eine Mischung davon enthält, wobei die Nanocluster Breiten von 5 bis 100 nm und Seitenverhältnisse von Länge zu Breite in dem Bereich von 1,5 bis 10,0 aufweisen und das Mikrokügelchen-Mahlen unter Verwendung von Zirkonoxidkugeln in dem Größenbereich von 0,015 bis 0,1 mm durchgeführt wird, und wobei das Mikrokügelchen-Mahlen für die Nanofaser in Lösungsmittel durchgeführt wird.

2. Verfahren nach Anspruch 1, wobei der Spinnschritt umfasst:
Hinzufügen von mindestens einer Art eines Ausgangsstoffs, der dazu fähig ist Metall, Nichtmetall, Metalloxid, eine Metallverbindung, eine Nichtmetallverbindung und/oder Verbundmetalloxid zu einer Lösung zusammenzusetzen, die ein Polymer enthält, um die Spinnlösung vorzubereiten; und
Herstellen eines Verbundfasernetzes, das das Polymer und mindestens eine Art eines Ausgangsstoffs enthält, durch Spinnen der Spinnlösung.

3. Verfahren nach Anspruch 2, wobei das Erzeugen einer Nanofaser umfasst:
Wärmebehandeln des Verbundfasernetzes, um das Polymer zu zersetzen.

4. Verfahren nach Anspruch 1, wobei das Metall Pt, Ni, Au, Fe, Co, Mo, In, Ir, Ag, Sn, Ti, Cu, Pd und/oder Ru ist.

5. Verfahren nach Anspruch 1, wobei das Nichtmetall Si ist, die Metallverbindung SnP ist, und die Nichtmetallverbindung SiN und/oder SiOx (0<X<2) ist.

6. Verfahren nach Anspruch 1, wobei das Metalloxid ein Zweikomponenten-Metalloxid aus SnO₂, Al₂O₃, TiO₂, Fe₂O₃, ZrO₂, V₂O₅, CoO, Co₃O₄, CaO, MgO, CuO, ZnO, In₂O₃, NiO, MoO₃ oder WO₃, ein Dreikomponenten-Metalloxid aus SnSiO₃, Zn₂SnO₄, CoSnO₃, Ca₂SnO₄, CaSnO₃, ZnCo₂O₄, Co₂SnO₄, Mg₂SnO₄, Mn₂SnO₄, CuV₂O₆, NaMnO₂, NaFeO₂, LiCoO₂, LiNiO₂, SrTiO₃, Li₄Ti₅O₁₂, BaTiO₃ oder LiMn₂O₄, oder ein Metalloxid in einem System mit mehr als vier Komponenten aus LiFePO₄, Li[Ni_{1/3}Co_{1/3}Mn_{1/3}]O₂, Li[Ni_{1/2}Mn_{1/2}]O₂, LiNi₁₋ₓCoₓO₂, LiAl_{0,05}Co_{0,85}Ni₀,₁₅O₂, La₁₋ₓSrₓCoO₃ (0,1≤X≤0, 9), La_{0,8}Sr_{0,2}Fe_{0,8}Co_{0,2}O₃, La₁₋ₓSrₓMnO₃ (0,1≤X≤0,9) oder La₁₋ₓSrₓFeO₃ (0,1≤X≤0,9) ist, wobei das Verbundmetalloxid Pt-RuO₂, Au-RuO₂, Pt-IrO₂, Pt-TiO₂, Pd-SnO₂, Pd-TiO₂, Ni-Y_{0,08}Zr_{0,92}O₂, Ag-BaTiO₃, Pt-LaNiO₃ oder Pt-Y_{0,08}Zr_{0,92}O₂ ist.

7. Verfahren nach Anspruch 1, wobei das Metalloxid aus mindestens zwei Arten von Metalloxiden zusammengesetzt ist und eine Feinstruktur einer festen Lösung, einer Mischphase und/oder einer Verbindung von mindestens zwei Arten von Metalloxiden aufweist.

8. Verfahren nach Anspruch 1, wobei der Ausgangsstoff aus Titanpropoxid, Strontiumchloridtetrahydrat, Lithiumnitrat, Lithiumacetylacetonat und Mangan-(II)-Acetat-Tetrahydrat, Siliziumtetraacetat, Rhuteniumchlorid, Zinnacetat, Nickelchlorid, Triphenylphosphin, Lanthanchlorid-7-Hydrat, Hexachloridplantinsäure-Hexahydrat (H₂PtCl₆ • 6H₂O), Eisenchlorid, Kobaltacetat, Aluminiumacetat, Zinkacetat, Vanadiumchlorid, Bariumchloridlösung, Magnesiumsulfat und/oder Kupferacetat ist.

9. Verfahren nach Anspruch 1, wobei das Spinnen ein Elektrospinnen, ein Schmelzblasspinnen, ein Flash-Spinnen oder ein elektrostatisches Schmelzblasspinnen umfasst.

10. Verfahren nach Anspruch 3, wobei die Wärmebehandlung bei einer Temperatur in dem Bereich von 300 bis 900°C in der Luft, einer reduzierten Atmosphäre, einer Deoxidationsatmosphäre (N₂/H₂, Co, N₂) einer Inertgas-haltigen (Ar) Atmosphäre oder einer Vakuumatmosphäre durchgeführt wird.

11. Verfahren nach Anspruch 1, ferner umfassend Trocknen des Lösungsmittels bei Raumtemperatur oder hoher Temperatur nach Mahlen der Nanofasern, wobei das Lösungsmittel die Nanopartikel, die Nanocluster oder eine Mischung davon enthält.

12. Verfahren zur Herstellung von Nanotinte, umfassend:
Hinzufügen eines Additivs zum Anpassen des Dispersionsvermögens oder der Viskosität von Nanopulver zu Nantotinte, die das durch das Verfahren nach einem der Ansprüche 1 bis 11 hergestellte Nanopulver enthält.

13. Verfahren nach Anspruch 12, wobei das Additiv mindestens eine Art von Dispergiermittel aus Polyvinylacetat, Polyurethan, Polyurethan-Copolymer einschließlich Polyetherurethan, Zelluloseacetat, Zellulosederivativ, Polymethylmethacrylat (PMMA), Polymethylacrylat (PMA), Polyacryl-Copolymer, Polyvinylacetat-Copolymer, Polyvinylalkohol (PVA), Polyfurfuralalkohol (PPFA), Polystyrol (PS), Polystyrol-Copolymer, Polyethylenoxid (PEO), Polypropylenoxid (PPO), Polyethylenoxid-Copolymer, Polypropylenoxid-Copolymer, Polycarbonat (PC), Polyvinylchlorid (PVC), Polycaprolacton, Polyvinylpyrrolidon (PVP), Polyvinylfluorid, Polyvinylidenfluorid-Copolymer oder Polyamide ist, und wobei das Zellulosederivativ Zelluloseacetatbutyrat oder Zelluloseacetatpropionat ist.

14. Verfahren nach Anspruch 13, wobei das Dispergiermittel in einem Bereich von 0,1 bis 20 Massen-% bezüglich des Nanopulvers hinzugefügt wird.

15. Verfahren nach Anspruch 12, wobei das Additiv mindestens eine Art eines Tensids aus Triton X-100, Essigsäure, Cetyltrimethylammoniumbromid (CTAB), Isopropyltris-Titanat und 3-Aminopropyltriexothy-Silan ist.

16. Verfahren nach Anspruch 12, wobei das Lösungsmittel Wasser, Ethanol, Tetrahydrofuran, N,N'-Dimethylformamid, N,N'-Dimethylacetamid, N-Methylpyrrolidon, Acetonitril, Toluol, Chloroform, Methylenchlorid, Benzen oder Xylol ist.

## Revendications

1. Un procédé pour fabriquer une nanopoudre pour nano-encre, comprenant:
- le filage d'une solution de filage contenant au moins un type de précurseur capable de former au moins un des types de produits choisis dans le groupe comprenant les métaux, les non-métaux, les oxydes métalliques, les dérivés métalliques, les dérivés non métalliques et les oxydes de métaux composites;
- la cristallisation du précurseur ayant été filé pour générer des nanofibres consistant en au moins un type de nanoparticules choisies dans le groupe comprenant les métaux, les non-métaux, les oxydes métalliques, les dérivés métalliques, les dérivés non métalliques et les oxydes de métaux composites; où les nanoparticules présentent des diamètres de 5 à 100 nm; et
- le broyage de la nano fibre consistant en un broyage par microbilles pour fabriquer des nanopoudres contenant des nanoparticules, des nanoagrégats de nanoparticules ou des mélanges en dérivant, dans lequel les nanoagrégats présentent des largeurs de 5 à 100 nm et un rapport longueur/largeur de l'ordre de 1,5 à 10,0, le broyage par microbilles est effectué par emploi de billes de zircone dans une plage de dimensions comprises entre 0,015 et 0,1 mm, et dans lequel le broyage par microbilles pour la nanofibre est effectué dans du solvant.

2. Le procédé selon la revendication 1, dans lequel l'étape de filage comprend:
- l'addition d'au moins un type de précurseur capable de former au moins un type choisi dans le groupe des métaux, non-métaux, des oxydes métalliques, des dérivés métalliques, des dérivés non métalliques et des oxydes de métaux composites à une solution contenant le polymère de façon à préparer la solution de filage; et
- la fabrication d'un tissu de fibres composite contenant le polymère et au moins un type de précurseur par filage de la solution de filage.

3. Le procédé selon la revendication 2, dans lequel la génération de la nanofibre comprend:
- le traitement thermique du tissu de fibres composite pour décomposer le polymère.

4. Le procédé selon la revendication 1, dans lequel le métal est au moins un des métaux choisis dans le groupe consistant en Pt, Ni, Au, Fe, Co, Mo, Au, Ir, Ag, Sn, Ti, Cu, Pd et Ru.

5. Le procédé selon la revendication 1, dans lequel le non-métal est Si, le composé métallique est SnP, et le composé non métallique est au moins un des composés choisi dans le groupe constitué par SiN et SiOx (0<x<2).

6. Le procédé selon la revendication 1, dans lequel l'oxyde métallique est
- un oxyde métallique formé de 2-constituants choisi dans le groupe constitué de SnO₂, Al₂O₃, TiO₂, Fe₂O₃, ZrO₂, V₂O₅, Fe₂O₃, CoO, Co₃O₄, CaO, MgO, CuO, ZnO, In₂O₃, NiO, MoO₃ et WO₃,
- un oxyde métallique formé de 3-constituants choisi dans le groupe constitué de SnSiO₃, Zn₂SnO₄, CoSnO₃, Ca₂SnO₄, CaSnO₃, ZnCo₂O₄, Co₂SnO₄, Mg₂SnO₄, Mn₂SnO₄, CuV₂O₆, NaMnO₂, NaFeO₂, LiCoO₂, LiNiO₂, SrTiO₃, Li₄Ti₅O₁₂, BaTiO₃ et LiMn₂O₄, et
- un oxyde métallique dans un système à plus de quatre constituants choisi dans un groupe constitué de LiFePO₄, Li[Ni_{1/3}Co_{1/3}Mn_{1/3}]O₂, Li[Ni_{1/2}Mn_{1/2}]O₂, LiNi₁₋ₓCoₓO₂, LiAl_{0,05}Co_{0,85}Ni_{0,15}O₂, La₁₋ₓSrₓCoO₃ (0,1≤X≤0,9), La_{0,8}Sr_{0,2}Fe_{0,8}Co_{0,2}O₃, La₁₋ₓSrₓMno₃ (0,1≤X≤0,9) et La₁₋ₓSrₓFeO₃ (0,1≤X≤0,9),
dans lequel l'oxyde métallique composite est Pt-RuO₂, Au-RuO₂, Pt-IrO₂, Pt-TiO₂, Pd-SnO₂, Pd-TiO₂, Ni-Y_{0,08}Zr_{0,92}O₂, Ag-BaTiO₃, Pt-LaNiO₃ ou Pt-Y_{0,08}Zr_{0,92}O₂.

7. Le procédé selon la revendication 1, dans lequel l'oxyde métallique est composé d'au moins deux types d'oxydes métalliques, et la structure fine d'au moins un des produits choisis parmi les solutions solides, les phases mixtes et les composés formés d'au moins deux types d'oxydes métalliques.

8. Le procédé selon la revendication 1, dans lequel le précurseur est au moins un des composés choisis dans le groupe constitué par le propoxyde de titane, le chlorure de strontium tétrahydraté, le nitrate de lithium, l'acétylacétonate de lithium et l'acétate de manganèse (II) tétrahydraté, le tétraacétate de silicium, le chlorure de ruthénium, l'acétate d'étain, le chlorure de nickel, la triphénylphosphine, le chlorure de lanthane-7-hydraté, l'acide chloroplatinique hexahydraté (H₂PtCl_{6•}6H₂O), le chlorure de fer, l'acétate de cobalt, l'acétate d'aluminium, l'acétate de zinc, le chlorure de vanadium, une solution de chlorure de baryum, le sulfate de magnésium et l'acétate de cuivre.

9. Le procédé selon la revendication 1, dans lequel le filage comprend l'électrofilage, le filage par fusion-soufflage, le filage éclair ou le filage électrostatique par fusion-soufflage.

10. Le procédé selon la revendication 3, dans lequel le traitement thermique est effectué à une température dans la plage de 300 à 900°C dans l'air, une atmosphère réductrice, une atmosphère de désoxydée (N₂/H₂, CO, N₂), une atmosphère de gaz inerte (Ar) ou sous vide.

11. Le procédé selon la revendication 1, comprenant en outre le séchage du solvant à température ambiante ou à une température élevée, après broyage des nano fibres, du solvant contenant les nanoparticules, des nanoagrégats ou de leurs mélanges.

12. Un procédé de fabrication de nano-encre comprenant:
l'ajout d'un additif pour ajuster la dispersibilité ou la viscosité des nanopoudres pour des nano-encres contenant les nanopoudres produites par le procédé selon l'une des revendications 1 à 11.

13. Le procédé selon la revendication 12, dans lequel l'additif est au moins un des types d'agents dispersants choisi dans le groupe consistant en: acétate de polyvinyle, polyuréthane, copolymère de polyuréthane incluant le polyéther uréthane, acétate de cellulose, dérivé de cellulose, polyméthylméthacrylate (PMMA), polyméthacrylate (PMA), copolymère polyacrylique, copolymère d'acétate de polyvinyle, alcool polyvinylique (PVA), polyfurfuralalcool (PPFA), polystyrène (PS), copolymère de polystyrène, oxyde de polyéthylène (PEO), polypropylène oxyde (PPO), copolymère de polyéthylène oxyde, copolymère de polypropylène oxyde, polycarbonate (PC), chlorure de polyvinyle (PVC), polycaprolactone, polyvinylpyrrolidone (PVP), polyfluorure de vinyle, copolymère de fluorure de polyvinylidène et polyamide, et dans lequel le dérivé de cellulose est l'acétate butyrate de cellulose ou l'acétate propionate de cellulose.

14. Le procédé selon la revendication 13, dans lequel l'agent dispersant est ajouté dans une plage de 0,1 à 20% en poids par rapport à la nanopoudre.

15. Le procédé selon la revendication 12, dans lequel l'additif est au moins un type de tensioactif choisi dans un groupe constitué par le triton X-100, l'acide acétique, le bromure de cétyltriméthylammonium (CTAB), l'isopropyltristitanate et le 3-aminopropyltriexothysilane.

16. Le procédé selon la revendication 12, dans lequel le solvant est au moins un produit choisi dans un groupe comprenant l'eau, l'éthanol, le tétrahydrofuranne, le N, N'-diméthylformamide, le N, N'-diméthylacétamide, la N-méthylpyrrolidone, l'acétonitrile, le toluène, le chloroforme, le chlorure de méthylène, le benzène et le xylène.
